# EUROPÄISCHE PATENTSCHRIFT

(11) **EP 2 467 864 B1**
(45) Veröffentlichungstag und Bekanntmachung des Hinweises auf die Patenterteilung: **14.06.2017**
(21) Anmeldenummer: 09782035.1
(22) Anmeldetag: 20.08.2009
(51) Int. Cl.: H01H 31/00, H01H 33/12, H02B 13/035, H02B 13/075, H01H 33/66

(54) **HALTEELEMENT FÜR EINE SCHALTANLAGE**
RETAINING ELEMENT FOR SWITCHGEAR
ÉLÉMENT DE MAINTIEN POUR UN APPAREILLAGE DE COMMUTATION

(43) Veröffentlichungstag der Anmeldung: 27.06.2012
(73) Patentinhaber: Siemens Aktiengesellschaft, 80333 München (DE)
(72) Erfinder: DRECHSLER, Gerhard, 55118 Mainz (DE); RANE, Tushar Maruti, 91056 Erlangen (DE); GERSTNER, Matthias, 60599 Frankfurt am Main (DE)
(86) Internationale Anmeldenummer: PCT/EP2009/060777
(87) Internationale Veröffentlichungsnummer: WO 2011/020513

(56) Entgegenhaltungen:
- DE-A1- 4 103 101
- DE-A1- 4 445 172
- US-A1- 2008 308 531

## Beschreibung

Die Erfindung betrifft ein Halteelement für eine Schaltanlage, die einen Leistungs- oder Lastschalter, einen Trennschalter und einen Erdungsschalter aufweist.

Schaltanlagen mit Leistungs- und/oder Lastschaltern, Trennschaltern und Erdungsschaltern sind aus dem landläufigen Stand der Technik bekannt. Bei derartigen Schaltanlagen sind die einzelnen Schalter unabhängig voneinander an Gehäusebauteilen der Schaltanlage befestigt. DE4445172 A1 und US2008/0308531 A1 offenbaren jeweils ein Halteelement gemäß dem Oberbegriff des Anspruchs 1. Aufgabe der vorliegenden Erfindung ist es, ein Halteelement für eine Schaltanlage auszubilden, welches einen kompakten, Platz sparenden Aufbau einer Schaltanlage ermöglicht. Erfindungsgemäß gelöst wird dies durch ein Halteelement für eine Schaltanlage, die einen Leistungs- und/oder Lastschalter, einen Trennschalter und einen Erdungsschalter aufweist, welches Halteelement jeweils einen Kontakt des Leistungsschalters, des Trennschalters und des Erdungsschalters trägt, aus Isoliermaterial ausgebildet ist und Befestigungsmittel zur Befestigung an der Schaltanlage aufweist, wobei das Halteelement eine Doppel-U-Form aufweist. Mit einem derartigen Halteelement ist ein kompakter und Platz sparender Aufbau einer Schaltanlage ermöglicht, weil durch das Halteelement aus Isoliermaterial die von dem Halteelement getragenen Kontakte von Leistungsschalter, Trennschalter und Erdungsschalter Platz sparend nahe beieinander angeordnet werden können. Tragen im Sinne der Erfindung bedeutet dabei, dass ein Kontakt entweder an dem Halteelement befestigt, beispielsweise verschraubt ist, oder ein Kontakt, beispielsweise ein Bewegkontakt eines Leistungsschalters oder Trennschalters, an dem Halteelement geführt ist, indem ein Bewegkontaktbolzen sich durch eine Öffnung des Halteelements hindurch erstreckt und daran geführt ist. Erfindungsgemäß weist das Halteelement eine Doppel-U-Form auf. Eine Doppel-U-Form mit einem ersten sich mit seinen Schenkeln in eine Richtung erstreckenden U und einem zweiten sich von der Basis des ersten U mit seinen Schenkeln hinweg erstreckenden zweiten U gewährleistet einerseits eine stabile Konstruktion des Halteelementes und andererseits sind durch die Schenkel der beiden U der Doppel-U-Form Kriechstrecken ausgebildet, welche eine erhöhte Isolationsfestigkeit des Halteelementes gegenüber umliegenden spannungsführenden Teilen der Schaltanlage gewährleistet.

In weiterer Ausgestaltung der Erfindung weist das Halteelement Querstreben zwischen den Schenkeln jeder U-Form auf. Derartige Querstreben führen zu einer weiteren mechanischen Stabilisierung des Halteelementes und ermöglichen somit ebenfalls einen kompakten Aufbau.

In weiterer Ausgestaltung der Erfindung liegen die am Halteelement getragenen Kontakte von Leistungsschalter, Trennschalter und Erdungsschalter in einer Flucht. Derartige in einer Flucht liegende oder mit anderen Worten hintereinander angeordnete Kontakte von Leistungsschalter, Trennschalter und Erdungsschalter, die an dem Halteelement getragen, also befestigt oder daran geführt sind, führen zu einem bezüglich einer seitlichen Ausdehnung des Halteelementes kompakten und Platz sparenden Aufbau des Halteelementes und damit auch der Schaltanlage.

Die Erfindung betrifft des Weiteren eine mehrphasige Schaltanlage mit jeweils einem Halteelement gemäß einer der obigen Ausführungsformen für jede Phase.

Die Erfindung wird im Folgenden anhand der Zeichnung und eines Ausführungsbeispiels mit Bezug auf die beiliegenden Figuren näher erläutert. Es zeigen:
- Figur 1: eine perspektivische Ansicht eines Teils einer mehrphasigen Schaltanlage mit erfindungsgemäßen Halteelementen;
- Figur 2: eine Schnittansicht durch ein erfindungsgemäßes Halteelement; und
- Figur 3: eine Seitenansicht einer Schaltanlage mit erfindungsgemäßem Halteelement.

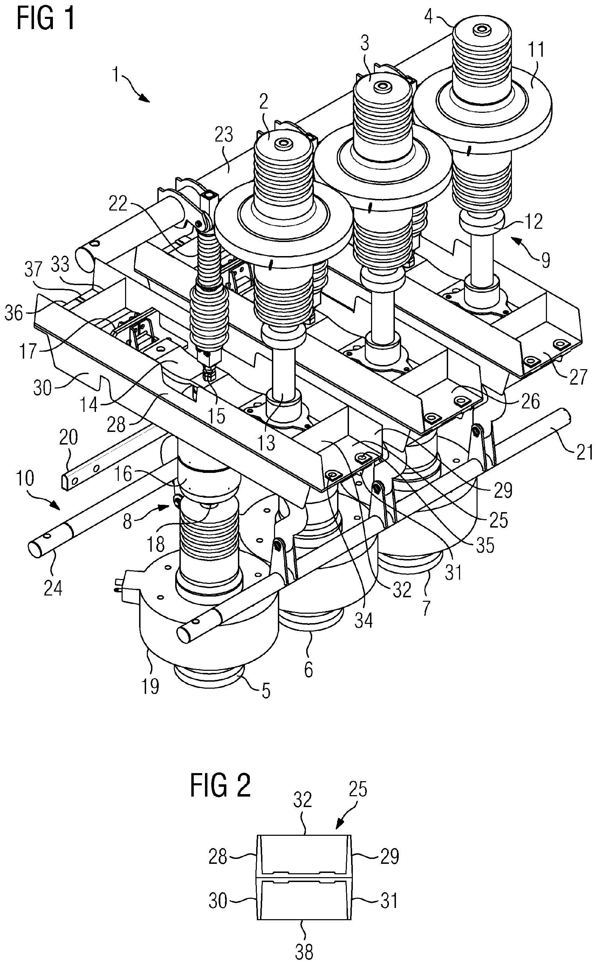

Figur 1 zeigt eine perspektivische Teilansicht einer dreiphasigen Schaltanlage 1, bei der zwischen Sammelschienenanschlüssen 2, 3 und 4 und Kabelabgangsanschlüssen 5, 6 und 7 ein dreiphasiger Leistungsschalter 8, ein dreiphasiger Trennschalter 9 und ein dreiphasiger Erdungsschalter 10 angeordnet sind. Im Weiteren werden jeweils nur Komponenten einer Phase näher bezeichnet und beschrieben, da die jeweiligen Komponenten der drei Phasen der Schalter die gleichen sind. Der Strompfad der Schaltanlage 1 wird anhand der Phase L1 im Folgenden näher erläutert, wobei der Übersichtlichkeit halber Schaltanlagenwände der Schaltanlage 1 figürlich nicht dargestellt sind. Über eine figürlich nicht dargestellte Sammelschiene wird der Strompfad gebildet über den Sammelschienenanschluss 2, welcher sich über eine Durchführung 11 zu einem Trennschalterfestkontakt 12 erstreckt, welcher zusammen mit einem Trennschalterbewegkontakt 13 den Trennschalter 9 bildet. Über ein Verbindungsmittel 14 ist der Trennschalterbewegkontakt mit einem Leistungsschalterbewegkontakt 15 einer Vakuumschaltröhre 16 sowie mit einem Erdungsschalterfestkontakt 17 leitend verbunden. Der Leistungsschalterbewegkontakt 15 der Vakuumschaltröhre 16 bildet mit einem Leistungsschalterfestkontakt 18 den Leistungsschalter 8 aus, wobei der Leistungsschalterfestkontakt 18 über einen Durchführungsstützer 19 mit dem Kabelabgangsanschluss 5 verbunden ist. Der Erdungsschalterfestkontakt 17 bildet mit einem Erdungsschalterbewegkontakt 20 den Erdungsschalter 10.

Der Trennschalterbewegkontakt 13 des Trennschalters 9 ist mit einer Trennschalterantriebswelle 21 mechanisch verbunden, so dass über einen figürlich nicht dargestellten Trennschalterantrieb eine Antriebsbewegung in den Trennschalterbewegkontakt 13 zum Öffnen bzw. Schließen des Trennschalters 9 unter Ausbildung einer Trennstrecke zur dielektrischen Isolation des Kabelabgangsbereichs vom Sammelschienenanschlussbereich einleitbar ist. Der Leistungsschalterbewegkontakt 15 ist mechanisch über eine Leistungsschalterantriebsstange 22 mit einer Leistungsschalterantriebswelle 23 verbunden zum Einleiten einer Antriebsbewegung in den Leistungsschalterbewegkontakt 15, so dass über die Leistungsschalterantriebswelle 23 der Leistungsschalter 8 betätigt werden kann. Der Erdungsschalterbewegkontakt 20 ist mechanisch mit einer Erdungsschalterantriebswelle 24 verbunden, um über die Erdungsschalterantriebswelle 24 eine Antriebsbewegung in den Erdungsschalterbewegkontakt 20 zum Schließen bzw. Herstellen einer Verbindung mit dem Erdungsschalterfestkontakt 17 auszubilden, um bei geöffnetem Trennschalter 9 eine Erdung beispielsweise des Kabelabgangsanschlussbereichs der Kabelabgangsanschlüsse 5, 6 und 7 zu ermöglichen.

Bei geöffnetem Erdungsschalter 10 und geschlossenem Leistungsschalter 8 sowie geschlossenem Trennschalter 9 ist somit ein Stromfluss zwischen Sammelschienenanschluss 2 und Kabelabgangsanschluss 5 ermöglicht. Der Leistungsschalter 8 dient beispielsweise zum Schalten bei einem in einem Energieübertragungssystem vorhandenen Kurzschluss, der Trennschalter 9 ist zum dielektrischen Trennen zwischen Sammelschienenanschluss 2 und Kabelabgangsanschluss 5 vorgesehen, wobei bei geöffnetem Trennschalter 9 über den Erdungsschalter 10 eine Erdung des Kabelabgangsanschlusses ermöglicht ist, beispielsweise um Wartungsarbeiten durchzuführen.

Der Trennschalterbewegkontakt 13, der Leistungsschalterbewegkontakt 15 sowie der Erdungsschalterfestkontakt 17 sind dabei an einem Halteelement 25 getragen, wobei für die Phasen L2 und L3 weitere Halteelemente 26 und 27 vorgesehen sind. Das Halteelement 25 weist dabei eine Doppel-U-Form auf mit sich im Ausführungsbeispiel nach oben erstreckenden Schenkeln 28 und 29, sich nach unten erstreckenden Schenkeln 30 und 31 sowie Querstreben 32 und 33. Die Schenkel 28, 29, 30 und 31 sowie die Querstreben 32 und 33 dienen der mechanischen Stabilisierung des Halteelementes 25 sowie der dielektrischen Isolation bzw. Ausbildung von Kriechstrecken durch das Halteelement 25, welches aus einem Isoliermaterial ausgebildet ist. Das Halteelement 25 verfügt weiterhin über Befestigungsmittel 34, 35, 36 und 37, im Ausführungsbeispiel in Form von Löchern, mittels derer das Halteelement 25 an figürlich nicht dargestellten Schaltanlagenwänden der Schaltanlage 1 befestigt, beispielsweise an ungebogenen Rändern einer Montageöffnung verschraubt werden kann.

An dem Halteelement 25 befestigt bzw. verschraubt ist der Erdungsschalterfestkontakt 17, wohingegen der Leistungsschalterbewegkontakt 15 und der Trennschalterbewegkontakt 13 an dem Halteelement durch Durchführungen durch das Halteelement 25 hindurch getragen und daran geführt ist.

Figur 2 zeigt eine Querschnittsansicht durch das erfindungsgemäße Halteelement 25 mit der Doppel-U-Form aus den Schenkeln 28 und 29 sowie den Schenkeln 30 und 31 sowie den Querstreben 32 und 38, welche sich sowohl im oberen U als auch im unteren U zwischen den Schenkeln 28 und 29 bzw. 30 und 31 erstrecken.

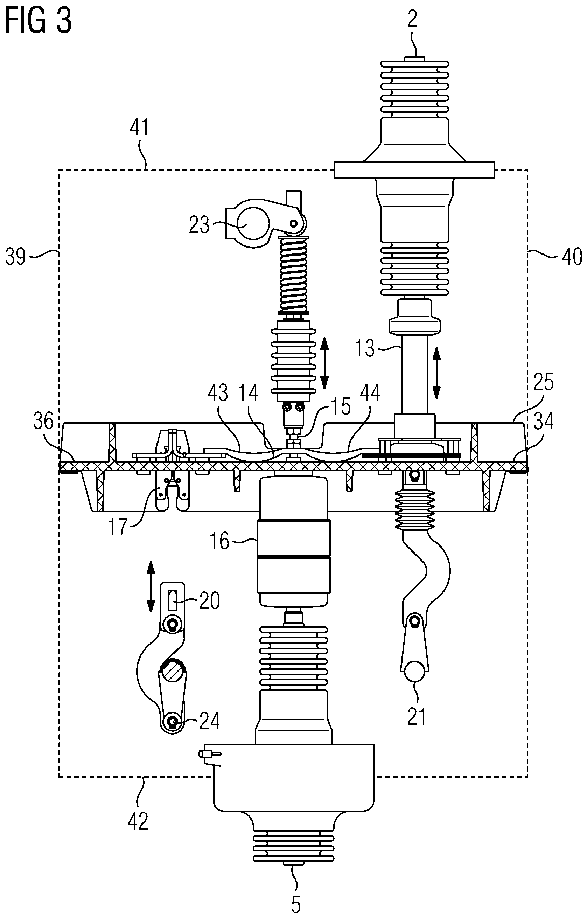

Figur 3 zeigt eine Seitenansicht der Schaltanlage 1 aus Figur 1, bei der schematisch die Seitenwände 39 und 40 der Schaltanlage 1 dargestellt sind sowie die oberen und untere Wände 41 und 42 der Schaltanlage 1 mit darin angeordneten Schaltern, wie bereits mit Bezug auf die Figur 1 beschrieben, sowie dem erfindungsgemäßen Halteelement 25, an welchem der Erdungsschalterfestkontakt 17 befestigt und damit getragen ist sowie der Leistungsschalterbewegkontakt 15 und der Trennschalterbewegkontakt 13 geführt und damit daran getragen sind. Mittels der Befestigungsmittel 34 und 36 ist das Halteelement 25 an den Seitenwänden 39 und 40 der Schaltanlage 1 durch figürlich nicht dargestellte Verschraubungen befestigt, im Ausführungsbeispiel an ungebogenen Rändern der Seitenwände 39 und 40. Mit anderen Worten erstreckt sich das Halteelement als Traverse von einer Seitenwand der Schaltanlage zur anderen Seitenwand. In der Figur 3 weiterhin ersichtlich ist das Verbindungsmittel 14 in Form eines flexiblen Strombandes, welches zur elektrisch leitenden Verbindung zwischen Erdungsschalterfestkontakt 17, Leistungsschalterbewegkontakt 15 und Trennschalterbewegkontakt 13 vorgesehen ist, über welches bei geöffnetem Erdungsschalter 10 sowie geschlossenem Trennschalter 9 und geschlossenem Leistungsschalter 8 der Strompfad zwischen Sammelschienenanschluss 2 und Kabelabgangsanschluss 5 ausgebildet ist und über welches Verbindungsmittel 14 bei geöffnetem Trennschalter und geschlossenem Erdungsschalter 10 und geschlossenem Leistungsschalter 8 eine Erdung des Kabelabgangsanschlusses 5 ermöglicht ist. Das Verbindungsmittel 14 weist dazu zwei flexible Abschnitte 43 und 44 auf, welche jeweils leitend mit dem Leistungsschalterbewegkontakt 15 verbunden sind und andererseits mit dem Erdungsschalterfestkontakt 17 bzw. mit dem Trennschalterbewegkontakt 13 leitend verbunden sind.

### Bezugszeichenliste

- 1: Schaltanlage
- 2, 3, 4: Sammelschienenanschlüsse
- 5, 6, 7: Kabelabgangsanschlüsse
- 8: Leistungsschalter
- 9: Trennschalter
- 10: Erdungsschalter
- 11: Durchführung
- 12: Trennschalterfestkontakt
- 13: Trennschalterbewegkontakt
- 14: Verbindungsmittel
- 15: Leistungsschalterbewegkontakt
- 16: Vakuumschaltröhre
- 17: Erdungsschalterfestkontakt
- 18: Leistungsschalterfestkontakt
- 19: Durchführungsstützer
- 20: Erdungsschalterbewegkontakt
- 21: Trennschalterantriebswelle
- 22: Leistungsschalterantriebsstange
- 23: Leistungsschalterantriebswelle
- 24: Erdungsschalterantriebswelle
- 25, 26, 27: Halteelemente
- 28, 29, 30, 31: Schenkel
- 32, 33: Querstreben
- 34, 35, 36, 37: Befestigungsmittel
- 38: Querstrebe
- 39, 40: Seitenwände
- 41: obere Wand
- 42: untere Wand
- 43, 44: flexible Abschnitte

- L1, L2, L3: Phasen

## Patentansprüche

1. Halteelement (25, 26, 27) für eine Schaltanlage (1), die einen Leistungs- oder Lastschalter (8), einen Trennschalter (9) und einen Erdungsschalter (10) aufweist, welches Halte-element (25, 26, 27) jeweils einen Kontakt (13, 15, 17) des Leistungsschalters (8), des Trennschalters (9) und des Erdungsschalters (10) trägt, aus Isoliermaterial ausgebildet ist und Befestigungsmittel (34, 35, 36, 37) zur Befestigung an der Schaltanlage (1) aufweist,
**dadurch gekennzeichnet, dass**
das Halteelement (25, 26, 27) eine Doppel-U-Form aufweist.

2. Haltelement nach Anspruch 1,
**dadurch gekennzeichnet, dass**
das Halteelement (25, 26, 27) Querstreben (32, 33, 38) zwischen den Schenkeln (28, 29, 30, 31) jeder U-Form aufweist.

3. Haltelement nach einem der vorangehenden Ansprüche,
**dadurch gekennzeichnet, dass**
die am Halteelement (25, 26, 27) getragenen Kontakte von Leistungsschalter (8), Trennschalter (9) und Erdungsschalter (10) in einer Flucht liegen.

4. Mehrphasige Schaltanlage (1) mit jeweils einem Halteelement (25, 26, 27) gemäß einem der Ansprüche 1 bis 3 für jede Phase (L1, L2, L3).

## Claims

1. Retaining element (25, 26, 27) for a switchgear assembly (1), said switchgear assembly comprising a circuit breaker or load breaker (8), a switch disconnector (9) and a grounding switch (10), which retaining element (25, 26, 27) bears a respective contact (13, 15, 17) of the circuit breaker (8), the switch disconnector (9) and the grounding switch (10), is formed from insulating material and has fastening means (34, 35, 36, 37) for fastening it to the switchgear assembly (1), **characterized in that**
the retaining element (25, 26, 27) is in the form of a double U.

2. Retaining element according to Claim 1,
**characterized in that**
the retaining element (25, 26, 27) has transverse struts (32, 33, 38) between the limbs (28, 29, 30, 31) of each U form.

3. Retaining element according to either of the preceding claims,
**characterized in that**
the contacts borne on the retaining element (25, 26, 27) of the circuit breaker (8), the switch disonnector (9) and the grounding switch (10) are aligned with one another.

4. Polyphase switchgear assembly (1) with a respective retaining element (25, 26, 27) according to one of Claims 1 to 3 for each phase (L1, L2, L3).

## Revendications

1. Elément (25, 26, 27) de maintien d'une installation (1) de distribution, qui a un interrupteur (8) de puissance ou à coupure en charge, un sectionneur (9) et un interrupteur (10) de mise à la terre, lequel élément (25, 26, 27) de maintien porte respectivement un contact (13, 15, 17) de l'interrupteur (8) de puissance du sectionneur (9) et de l'interrupteur (10) de mise à la terre, est constitué en un matériau isolant et a des moyens (34, 35, 36, 37) de fixation à l'installation (1) de distribution,
**caractérisé en ce que**
l'élément (25, 26, 27) de maintien a une forme en double U.

2. Elément de maintien suivant la revendication 1,
**caractérisé en ce que**
l'élément (25, 26, 27) de maintien a des traverses (32, 33, 38) entre les branches (28, 29, 30, 31) de chaque forme en U.

3. Elément de maintien suivant l'une des revendications précédentes,
**caractérisé en ce que**
des contacts portés sur l'élément (25, 26, 27) de maintien de l'interrupteur (8) de puissance du sectionneur (9) et de l'interrupteur (10) de mise à la terre sont alignés.

4. Installation (1) de distribution à plusieurs phases ayant un élément (25, 26, 27) de maintien suivant l'une des revendications 1 à 3 pour chaque phase (L1, L2, L3).
